# EUROPÄISCHE PATENTANMELDUNG

(11) **EP 1 081 420 A2**
(43) Veröffentlichungstag der Anmeldung: **07.03.2001**
(21) Anmeldenummer: 00119023.0
(22) Anmeldetag: 01.09.2000
(51) Int. Cl.: F16K 1/226

(54) **Klappe**

(30) Priorität: 02.09.1999 DE 19941888
(71) Anmelder: Linde Aktiengesellschaft, 65189 Wiesbaden (DE)
(72) Erfinder: Krieg, Oliver, Dipl.-Ing. (FH), 86441 Zusmarshausen (DE)

(57) **Zusammenfassung**

Gegenstand der Erfindung ist eine Armatur zum Absperren von kryogenen Medien, wobei die Armatur ein Gehäuse (1) und einen bewegbaren Absperrkörper aufweist und das Gehäuse (1) und der Absperrkörper (2) einander zugeordnete Dichtflächen aufweisen. Im Bereich der Dichtflächen ist mindestens eine ringförmige Dichtung angeordnet. Erfindungsgemäß sind mindestens zwei voneinander in Durchflußrichtung der Armatur beabstandete Dichtungen vorgesehen, wobei eine erste Dichtung als Kupferdichtung (7, 18) ausgeführt ist und eine zweite Dichtung als PTFE-Dichtung (8, 19) ausgeführt ist. Die Kupferdichtung (7, 18) und die PTFE-Dichtung (8, 19) sind an dem Gehäuse (1) befestigt und liegen bei geschlossener Armatur an einer metallischen Dichtfläche des Absperrkörpers (2) an.

## Beschreibung

Die Erfindung betrifft eine Armatur zum Absperren von kryogenen Medien, wobei die Armatur ein Gehäuse und einen bewegbaren Absperrkörper aufweist und das Gehäuse und der Absperrkörper einander zugeordnete Dichtflächen aufweisen, und wobei die Dichtflächen zumindest teilweise von mindestens einer ringförmigen Dichtung gebildet sind.

Armaturen der genannten Art werden in der Regel zum Absperren von Rohrleitungen benutzt. Die in geschlossener Stellung befindliche Armatur soll die Rohrleitung in allen Betriebssituationen vollständig verschließen, während die geöffnete Armatur einen möglichst geringen Strömungswiderstand darstellen soll. In Zwischenstellungen kann die Armatur zur Strömungsregelung des Mediums verwendet werden.

Für die Verwendung mit kryogenen Medien muß das Dichtsystem der Armatur besonderen Anforderungen genügen. Für besondere Anwendung wird beispielsweise ein sicheres Absperren von kryogenem Helium bei einer Temperatur von -270 °C gefordert. Helium gilt wegen seiner geringen Atomgröße als besonders flüchtiges Gas. In einer anderen Betriebssituation muß auch bei sehr stark unterschiedlichen Temperaturen verschiedener Teile der Armatur, beispielsweise bei einseitiger Befüllung der Armatur mit einem kryogenem Stickstoff von -196 °C und einer Umgebungstemperatur von 20 °C, die Gasdichtheit der Armatur gewährleistet sein.

Der Erfindung liegt daher die Aufgabe zugrunde, eine Armatur zur Verfügung zu stellen, die in allen Betriebssituationen ein sicheres Absperren von kryogenen und nicht-kryogenen Medien gewährleistet.

Diese Aufgabe wird erfindungsgemäß dadurch gelöst, daß mindestens zwei voneinander in Durchflußrichtung der Armatur beabstandete Dichtungen vorgesehen sind, wobei eine erste Dichtung als Kupferdichtung ausgeführt ist und eine zweite Dichtung als PTFE-Dichtung ausgeführt ist. Die Dichtheit gegenüber Helium wird bei homogener Temperatur der Armatur mittels der Kupferdichtung erreicht, wobei insbesondere der Absperrkörper und die im Bereich des Mediums befindlichen Teile des Gehäuses eine identische Temperatur aufweisen. Die Kupferdichtung hält darüber hinaus auch hohen Temperaturen stand, wodurch die Dichtheit der Armatur beispielsweise auch im Brandfall gewährleistet ist. Die Gasdichtheit bei stark unterschiedlichen Temperaturen verschiedener Teile der Armatur wird mittels der PTFE-Dichtung erreicht, deren Form und Abmessung sich infolge der Verformbarkeit des Werkstoffs PTFE an sich infolge von Wärmedehnung verändernde Geometrien des Absperrkörpers und des Gehäuses anpassen können.

Ein besonders gutes Dichtverhalten bei unterschiedlichen Temperaturen wird erreicht, wenn zur Vorspannung der PTFE-Dichtung mindestens eine Feder, vorzugsweise eine Edelstahlfeder vorgesehen ist. Als Feder kann beispielsweise eine ringförmige Schraubenfeder vorgesehen sein, die in eine Nut der PTFE-Dichtung eingesetzt ist und eine Dichtlippe der PTFE-Dichtung in Richtung einer ihr zugeordneten Dichtfläche vorspannt.

Gemäß einer möglichen Ausführungsform ist die Kupferdichtung durch spanende Fertigung herstellbar. Die Dichtfläche der Kupferdichtung wird hierbei beispielsweise durch Schleifen bearbeitet.

Ebenso ist es möglich, daß die Kupferdichtung durch Umformen herstellbar ist. Die Dichtung besteht hierbei im wesentlichen aus gebogenem oder in anderer Weise umgeformten Kupferblech.

Hierbei ist es zweckmäßig, wenn zur Vorspannung der Kupferdichtung mindestens eine Feder, vorzugsweise eine Edelstahlfeder vorgesehen ist. Einer aus umgeformtem Blech hergestellten Kupferdichtung verleiht die Feder die erforderliche Steifigkeit. Das Kupferblech kann hierbei derart gebogen sein, daß eine formschlüssige Verbindung zwischen der Kupferdichtung und der Feder vorliegt.

Eine zweckmäßige Anordnung liegt vor, wenn die Kupferdichtung an dem Gehäuse befestigt ist und bei geschlossener Armatur an einer metallischen Dichtfläche des Absperrkörpers anliegt. Die metallische Dichtfläche ist von einer bearbeiteten Oberfläche des aus Stahl bestehenden Absperrkörpers gebildet. Bei geschlossener Armatur ist diese metallische Dichtfläche an die Dichtfläche der Kupferdichtung angedrückt.

Analog hierzu ist ebenfalls die PTFE-Dichtung an dem Gehäuse befestigt und liegt bei geschlossener Armatur an der metallischen Dichtfläche des Absperrkörpers an. Bei dieser Ausführungsform sind somit alle Dichtungen an dem Gehäuse befestigt, während der Absperrkörper lediglich eine bearbeitete Dichtfläche aufweist.

Gemäß einer anderen Ausführungsform ist die PTFE-Dichtung an dem Gehäuse befestigt und liegt bei geschlossener Armatur an einer zumindest teilweise aus PTFE bestehenden Dichtfläche des Absperrkörpers an. Bei dieser Ausführungsform ist auch an dem Absperrkörper eine PTFE-Dichtung befestigt. Bei geschlossener Armatur ist die Dichtfläche der am Absperrkörper befestigten PTFE-Dichtung an die Dichtfläche der am Gehäuse befestigten PTFE-Dichtung angedrückt.

Vorzugsweise ist der Absperrkörper als Absperrklappe ausgeführt. Eine besonders zuverlässige Abdichtung wird erreicht, wenn die Absperrklappe exzentrisch, vorzugsweise doppeltexzentrisch gelagert ist. Die doppeltexzentrische Lagerung einer Absperrklappe ist beispielsweise in der DE 195 15 014 A1 beschrieben.

Weitere Vorteile und Einzelheiten der Erfindung werden Anhand der in den schematischen Figuren dargestellten Ausführungsbeispiele näher erläutert. Dabei zeigt
- Figur 1: eine erfindungsgemäße Armatur im Querschnitt,
- Figur 2: das Dichtsystem der Armatur gemäß einer ersten Ausführungsform,
- Figur 3: das Dichtsystem der Armatur gemäß einer zweiten Ausführungsform.

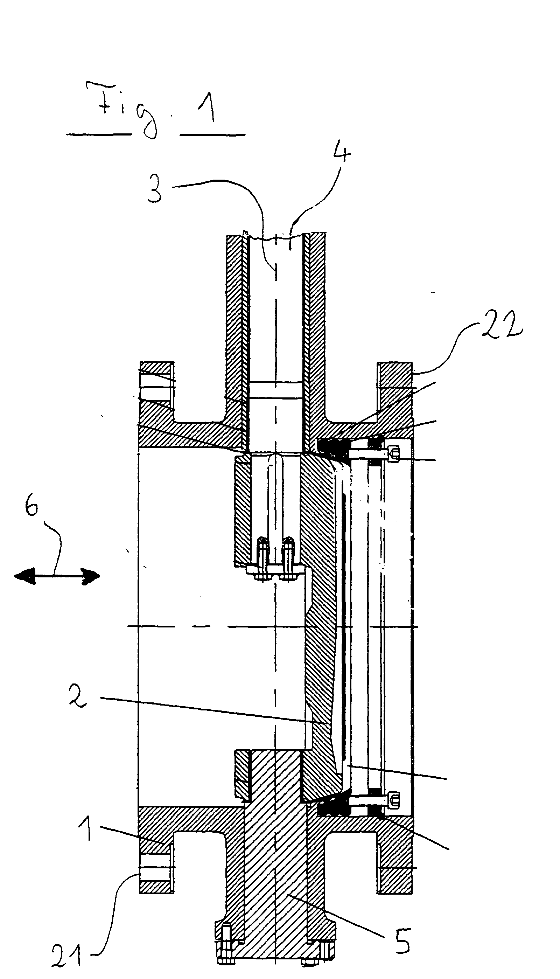

Die in Figur 1 dargestellte erfindungsgemäße Armatur weist ein Gehäuse 1 auf, in dem ein als Absperrklappe ausgeführter Absperrkörper 2 um eine Achse 3 schwenkbar gelagert ist. Zum Schwenken des Absperrkörpers 2 ist ein nicht dargestellter Schwenkantrieb vorgesehen, der über eine im Gehäuse 1 gleitgelagerte Welle 4 mit dem Absperrkörper verbunden ist. In dem in der Zeichnung unteren Bereich ist der Absperrkörper 2 an einem am Gehäuse 1 befestigten Zapfen 5 gleitgelagert.

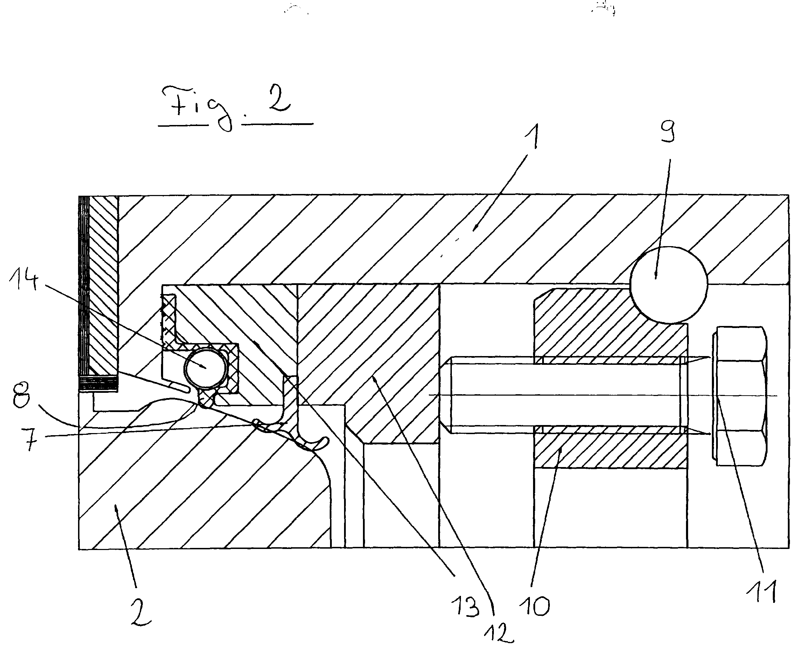

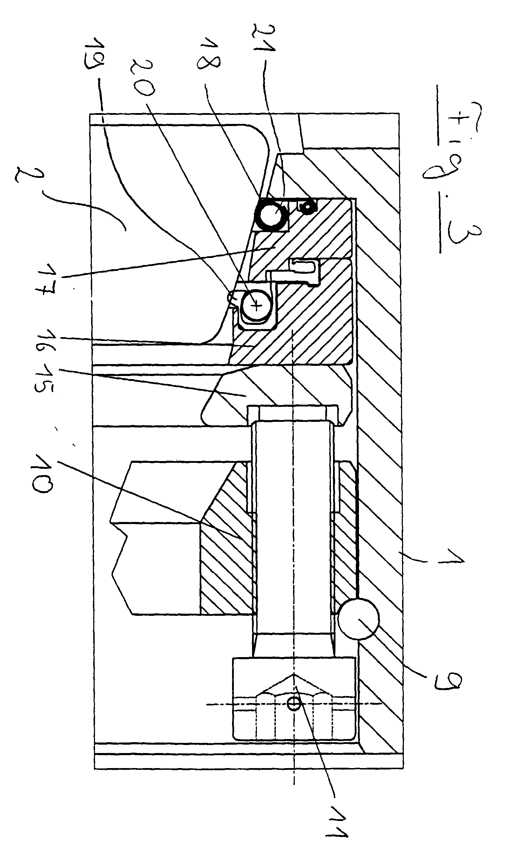

Die Armatur kann mittels Flanschverbindungen 21, 22 in Rohrleitungen eingebaut werden, wobei die Durchflußrichtung des die Armatur durchströmenden Mediums mittels des Pfeils 6 gekennzeichnet ist. In der dargestellten Position des Absperrkörpers 2 befindet sich die Armatur in geschlossener Stellung. Hierbei liegt eine an dem Absperrkörper 2 angeordnete Dichtfläche an einer am Gehäuse 1 angeordneten, von Dichtungsbauteilen gebildeten Dichtfläche an. Im einzelnen sind mögliche Ausführungen des Dichtsystems nachfolgend anhand der Figuren 2 und 3 beschrieben.

Erfindungsgemäß sind bei dem in Figur 2 dargestellten Dichtsystem eine Kupferdichtung 7 und eine PTFE-Dichtung 8 vorgesehen. Die beiden ringförmigen Dichtungen 7, 8 sind an dem Gehäuse 1 mittels einer Klemmvorrichtung befestigt. Die Klemmvorrichtung umfaßt einen Haltering 9, der in eine im Gehäuse 1 vorgesehene Nut eingesetzt ist. Gegen den Haltering 9 ist ein mit Gewindebohrungen versehener Spannring 10 verspannt, wobei in den Spannring eingeschraubte Schrauben 11 stirnseitig auf einen Klemmring 12 drücken. Der Klemmring 12 drückt auf einen weiteren Klemmring 13, der sich an einer Kante des Gehäuses 1 abstützt. Zwischen die beiden Klemmringen 12, 13 ist erfindungsgemäß eine Kupferdichtung 7 geklemmt, während zwischen den Klemmring 13 und dem Gehäuse 1 eine PTFE-Dichtung 8 geklemmt ist.

Die in Figur 2 dargestellte Kupferdichtung 7 ist mit spanenden Bearbeitungsschritten hergestellt, wobei insbesondere die den Absperrkörper 2 berührende Oberfläche feinbearbeitet ist. Die Kupferdichtung 7 ist derart angeordnet, daß die Kupferdichtung 7 bei geschlossener Armatur durch eine mit dem Absperrkörper 2 ausgeübte Kraft elastisch verformt ist. Durch diese Kraft wird die gewünschte Dichtwirkung der Kupferdichtung, insbesondere gegenüber Heliumgas, erreicht.

Die PTFE-Dichtung 8 weist eine an dem Absperrkörper 2 anliegende Dichtlippe auf, die mittels einer ringförmigen Feder 14 an den Absperrkörper 2 gedrückt wird. Die PTFE-Dichtung 8 ist aufgrund der Elastizität Ihres Materials in der Lage, auch bei Verformungen der Bauteile der Armatur, wie sie z.B. bei einseitiger Abkühlung während der Befüllung mit tiefkaltem Gas auftreten, das Gehäuse 1 gegenüber dem Absperrkörper 2 abzudichten.

Figur 3 zeigt eine andere mögliche Ausführungsform für das Dichtsystem einer erfindungsgemäßen Armatur. Die Befestigung der Dichtungen 18, 19 erfolgt analog zur Anordnung gemäß Fig. 2 mittels Schrauben 11 und mehreren Klemmringen 15, 16, 17. Zwischen dem Klemmring 16 und dem Klemmring 17 ist eine PTFE-Dichtung 19 befestigt, die mittels einer ringförmigen Feder 20 vorgespannt ist. Zwischen den Klemmring 17 und dem Gehäuse 1 ist eine Kupferdichtung 18 geklemmt.

Die Kupferdichtung 20 ist durch spannloses Bearbeiten, z.B. durch Biegen und/oder Ziehen aus Kupferblech hergestellt. Eine Vorspannung in Richtung des Absperrkörpers 2 erfährt die Kupferdichtung durch eine eingearbeitete ringförmige Stahlfeder 21, die sich während des Schließens oder Öffnens der Armatur elastisch verformt.

## Patentansprüche

1. Armatur zum Absperren von kryogenen Medien, wobei die Armatur ein Gehäuse (1) und einen bewegbaren Absperrkörper aufweist und das Gehäuse (1) und der Absperrkörper (2) einander zugeordnete Dichtflächen aufweisen, und wobei im Bereich der Dichtflächen mindestens eine ringförmige Dichtung angeordnet ist, **dadurch gekennzeichnet**, daß mindestens zwei voneinander in Durchflußrichtung der Armatur beabstandete Dichtungen vorgesehen sind, wobei eine erste Dichtung als Kupferdichtung (7, 18) ausgeführt ist und eine zweite Dichtung als PTFE-Dichtung (8, 19) ausgeführt ist.

2. Armatur nach Anspruch 1, dadurch gekennzeichnet, daß zur Vorspannung der PTFE-Dichtung (8, 19) mindestens eine Feder (14, 20), vorzugsweise eine Edelstahlfeder vorgesehen ist.

3. Armatur nach einem der Ansprüche 1 oder 2, dadurch gekennzeichnet, daß die Kupferdichtung (7) durch spanende Fertigung herstellbar ist.

4. Armatur nach einem der Ansprüche 1 bis 3, dadurch gekennzeichnet, daß die Kupferdichtung (18) durch Umformen herstellbar ist.

5. Armatur nach einem der Ansprüche 1 bis 4, dadurch gekennzeichnet, daß zur Vorspannung der Kupferdichtung (18) mindestens eine Feder (21), vorzugsweise eine Edelstahlfeder vorgesehen ist.

6. Armatur nach einem der Ansprüche 1 bis 5, dadurch gekennzeichnet, daß die Kupferdichtung (7, 18) an dem Gehäuse (1) befestigt ist und bei geschlossener Armatur an einer metallischen Dichtfläche des Absperrkörpers (2) anliegt.

7. Armatur nach einem der Ansprüche 1 bis 6, dadurch gekennzeichnet, daß die PTFE-Dichtung (8, 19) an dem Gehäuse (1) befestigt ist und bei geschlossener Armatur an einer metallischen Dichtfläche des Absperrkörpers (2) anliegt.

8. Armatur nach einem der Ansprüche 1 bis 6, dadurch gekennzeichnet, daß die PTFE-Dichtung (8, 19) an dem Gehäuse (1) befestigt ist und bei geschlossener Armatur an einer zumindest teilweise aus PTFE bestehenden Dichtfläche des Absperrkörpers (2) anliegt.

9. Armatur nach einem der Ansprüche 1 bis 8, dadurch gekennzeichnet, daß der Absperrkörper (2) als Absperrklappe ausgeführt ist.

10. Armatur nach Anspruch 9, dadurch gekennzeichnet, daß die Absperrklappe exzentrisch, vorzugsweise doppeltexzentrisch gelagert ist.
